# EUROPEAN PATENT SPECIFICATION

(11) **EP 2 809 091 B1**
(45) Date of publication and mention of the grant of the patent: **02.10.2019**
(21) Application number: 13740769.8
(22) Date of filing: 28.01.2013
(51) Int. Cl.: H04W 4/06, H04W 16/32, H04W 36/24

(54) **MOBILE COMMUNICATION SYSTEM, USER TERMINAL, BASE STATION, AND PROCESSOR**
MOBILES KOMMUNIKATIONSSYSTEM, BENUTZERGERÄT, BASISSTATION UND PROZESSOR
SYSTÈME DE COMMUNICATION MOBILE, TERMINAL UTILISATEUR, STATION DE BASE ET PROCESSEUR

(30) Priority: 27.01.2012 US 201261591452 P; 11.05.2012 US 201261645997 P
(43) Date of publication of application: 03.12.2014
(73) Proprietor: Kyocera Corporation, Kyoto-shi Kyoto 612-8501 (JP)
(72) Inventor: CHANG, Henry, San Diego, California 92123 (US); FUKUTA, Noriyoshi, Kyoto-shi Kyoto 612-8501 (JP)
(74) Representative: SSM Sandmair
(86) International application number: PCT/JP2013/051786
(87) International publication number: WO 2013/111905

(56) References cited:
- EP-A1- 1 650 989
- WO-A1-2008/044451
- WO-A1-2009/133767
- US-A1- 2010 074 159
- US-A1- 2011 039 551
- INTEL CORPORATION: 'Clarifications on Use of MBMSInterestIndication' 3GPP TSG RAN WG2 MEETING #76 R2-116278 14 November 2011, XP050564509
- HUAWEI ET AL.: 'Open issues for MBMSInterestIndication' 3GPP TSG-RAN WG2 MEETING #76 R2-116106 14 November 2011, XP050564437
- HUAWEI ET AL: "Open issues for MBMSInterestIndication", 3GPP DRAFT; R2-116106 OPEN ISSUES FOR MBMSINTERESTINDICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564437, [retrieved on 2011-11-08]
- HUAWEI: "Discuss on the MBMS Service Continuity", 3GPP DRAFT; R3-112777 DISCUSSION ON MBMS SERVICE CONTINUITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. San Francisco, USA; 20111114 - 20111118, 4 November 2011 (2011-11-04), XP050566018, [retrieved on 2011-11-04]

## Description

### TECHNICAL FIELD

The present invention relates to a communication control method and a user terminal, employed in a mobile communication system including a general cell supporting PTM transmission of MBMS data and a specific cell not supporting PTM transmission of MBMS data.

### BACKGROUND ART

In 3GPP (3rd Generation Partnership Project) which is a standardization project of mobile communication systems, standardization of eMBMS (evolved Multimedia Broadcast Multicast Service) is in progress (see Non-patent Document 1, for example).

In such mobile communication systems, general cells (such as macro-cells) are MBMS cells supporting MBMS and are capable of transmitting MBMS data by multicast (Point-To-Multipoint: PTM). In contrast, specific cells (such as CSG cells) are non-MBMS cells not supporting MBMS and are not capable of transmitting MBMS data by PTM.

It is to be noted that the term "cell" is used not only to indicate the smallest unit of a radio communication area, but also to indicate a function of performing radio communication with a user terminal.

### PRIOR ART DOCUMENT

### NON-PATENT DOCUMENT

**NON-PATENT DOCUMENT 1:** 3GPP Contribution RP-111374, September 2011

2: Document 3GPP Draft, R2-116106 Open issues for MBMSInterestIndication, 3rd Generation Partnership Project (3GPP), represents relevant prior art.

### SUMMARY OF THE INVENTION

The invention is defined by the claims. Assumed is a situation where, in a communication environment in which a specific cell operated at a frequency different from that of a general cell is installed in the general cell, a user terminal located at a point where the general cell overlaps the specific cell establishes a connection with the specific cell.

If the user terminal in this situation desires to receive MBMS data newly transmitted from the general cell while being located in the specific cell, it is difficult for the user terminal to receive the MBMS data while being located in the specific cell according to the current specification.

Against this background, the present invention aims to provide a communication control method and a user terminal which enable the user terminal to receive MBMS data appropriately.

A mobile communication system according to a first feature includes an MBMS cell supporting PTM transmission of MBMS data and a non-MBMS cell not supporting PTM transmission of the MBMS data. The mobile communication system includes a user terminal that establishes a connection with the non-MBMS cell. The user terminal transmits an MBMS interest notification indicating that the user terminal desires to receive the MBMS data, to the non-MBMS cell.

Amobile communication system according to a second feature includes an MBMS cell supporting PTM transmission of MBMS data and a non-MBMS cell not supporting PTM transmission of the MBMS data. The mobile communication system includes a user terminal that establishes a connection with the MBMS cell. When the user terminal changes a reception of the MBMS data transmitted from the MBMS cell, the user terminal transmits an MBMS interest notification about the change to the MBMS cell.

A mobile communication system according to a third feature supports PTM transmission of MBMS data. The mobile communication system includes a user terminal that performs a handover from a source base station to a target base station. The source base station transmits an MBMS interest notification indicating that the user terminal desires to receive the MBMS data, to the target base station, in a preparation of the handover to the target base station.

### BRIEF DESCRIPTION OF THE DRAWINGS

Fig. 1 shows a configuration of an LTE system according to an embodiment of the present invention.
Fig. 2 shows a protocol stack of a radio interface of the LTE system according to the embodiment of the present invention.
Fig. 3 shows a configuration of a radio frame used in the LTE system according to the embodiment of the present invention.
Fig. 4 shows a logical composition of an eMBMS base according to the embodiment of the present invention.
Fig. 5 shows mapping among logical channels, transport channels, and physical channels according to the embodiment of the present invention.
Fig. 6 is a block diagram of an eNB according to the embodiment of the present invention.
Fig. 7 is a block diagram of a UE according to the embodiment of the present invention.
Fig. 8 shows an operation environment of the eNB and the UE according to the embodiment of the present invention.
Fig. 9A shows illustrative embodiment 1 of an MBMS interest notification, and Fig. 9B shows illustrative embodiment 1 of an MBMS non-interest notification.
Fig. 10A shows illustrative embodiment 2 of the MBMS interest notification, and Fig. 10B shows illustrative embodiment 2 of the MBMS non-interest notification.
Fig. 11 is a sequence chart showing operation pattern 1 carried out in the operation environment shown in Fig. 8.
Fig. 12 is a sequence chart showing operation pattern 2 carried out in the operation environment shown in Fig. 8.
Fig. 13 is a sequence chart showing operation pattern 3 carried out in the operation environment shown in Fig. 8.
Fig. 14 is a sequence chart showing operation pattern 4 carried out in the operation environment shown in Fig. 8.
Fig. 15 is a sequence chart showing operation pattern 5 carried out in the operation environment shown in Fig. 8.
Fig. 16 is a diagram for explaining a handover from a CSG cell to a macro-cell.
Fig. 17 is a diagram for explaining a handover from a macro-cell to a CSG cell.
Fig. 18 is a sequence chart showing an option 1 according to the embodiment of the present invention.
Fig. 19 is a sequence chart showing an option 2 according to the embodiment of the present invention.

### DESCRIPTION OF THE EMBODIMENTS

### [Summary of the Embodiment]

A mobile communication system according to embodiments includes an MBMS cell supporting PTM transmission of MBMS data and a non-MBMS cell not supporting PTM transmission of the MBMS data. The mobile communication system includes a user terminal that establishes a connection with the non-MBMS cell. The user terminal transmits an MBMS interest notification indicating that the user terminal desires to receive the MBMS data, to the non-MBMS cell.

In the embodiments, the MBMS interest notification includes information indicating a frequency in which the user terminal desires to receive the MBMS data.

A mobile communication system according to embodiments includes an MBMS cell supporting PTM transmission of MBMS data and a non-MBMS cell not supporting PTM transmission of the MBMS data. The mobile communication system includes a user terminal that establishes a connection with the MBMS cell. When the user terminal changes a reception of the MBMS data transmitted from the MBMS cell, the user terminal transmits an MBMS interest notification about the change to the MBMS cell.

A mobile communication system according to embodiments supports PTM transmission of MBMS data. The mobile communication system includes a user terminal that performs a handover from a source base station to a target base station. The source base station transmits an MBMS interest notification indicating that the user terminal desires to receive the MBMS data, to the target base station, in a preparation of the handover to the target base station.

In the embodiments, when the source base station transmits a handover request to the target base station in the preparation of the handover, the source base station includes the MBMS interest notification in the handover request.

A user terminal according to embodiments is a terminal in a mobile communication system including an MBMS cell supporting PTM transmission of MBMS data and a non-MBMS cell not supporting PTM transmission of the MBMS data. The user terminal includes a transmitter that transmits an MBMS interest notification indicating that the user terminal desires to receive the MBMS data to the non-MBMS cell, in a case where the user terminal has been established a connection with the non-MBMS cell.

A user terminal according to embodiments is a terminal in a mobile communication system including an MBMS cell supporting PTM transmission of MBMS data and a non-MBMS cell not supporting PTM transmission of the MBMS data. The user terminal includes a transmitter that transmits, to the MBMS cell, an MBMS interest notification about a change of a reception of the MBMS data transmitted from the MBMS cell, when the user terminal changes the reception of the MBMS data in a case where the user terminal has been established a connection with the MBMS cell.

A base station according to embodiments includes a controller that performs a preparation of a handover of a user terminal to a target base station. The controller transmits an MBMS interest notification indicating that the user terminal desires to receive the MBMS data, to the target base station, in the preparation of the handover.

A processor according to embodiments is provided in a user terminal in a mobile communication system including an MBMS cell supporting PTM transmission of MBMS data and a non-MBMS cell not supporting PTM transmission of the MBMS data. The processor executes a process for transmitting an MBMS interest notification indicating that the user terminal desires to receive the MBMS data, to the non-MBMS cell, in a case where the user terminal has been established a connection with the non-MBMS cell.

A processor according to embodiments is provided in a user terminal in a mobile communication system including an MBMS cell supporting PTM transmission of MBMS data and a non-MBMS cell not supporting PTM transmission of the MBMS data. The processor executes a process for transmitting, to the MBMS cell, an MBMS interest notification about a change of a reception of the MBMS data transmitted from the MBMS cell, when the user terminal changes the reception of the MBMS data in a case where the user terminal has been established a connection with the MBMS cell.

A processor according to embodiments is provided in a base station. The processor executes a process for transmitting an MBMS interest notification indicating that a user terminal desires to receive MBMS data, to a target base station, in a preparation of a handover of the user terminal to the target base station.

A communication control method according to embodiments is employed in a mobile communication system (e.g. LTE system) including a general cell (e.g. macro-cell) supporting PTM transmission of MBMS data and a specific cell (e.g. CSG cell) not supporting PTM transmission of the MBMS data. The method includes a step A of sending the specific cell an MBMS interest notification (e.g. MBMS Interest Indication (interest)) from a user terminal (UE) establishing a connection with the specific cell, the MBMS interest notification indicating that the user terminal desires to receive the MBMS data.

In the step A, the user terminal may send the specific cell at least one of information indicating a frequency of the general cell and an identifier of the general cell, together with the MBMS interest notification.

The communication control method may further comprise a step B of performing a handover procedure from the specific cell to the general cell according to the MBMS interest notification sent in the step A.

The communication control method may further comprise, after the step B, a step C of sending the general cell an MBMS non-interest notification (e.g. MBMS Interest Indication (no longer interest)) indicating that the user terminal no longer desires to receive the MBMS data transmitted from the general cell from the user terminal, when the user terminal no longer desires to receive the MBMS data.

The step B may comprise a step B1 of sending the general cell a handover request via a network interface (e.g. S1 interface and/or X2 interface) from the specific cell; and in the step B1, the specific cell notifies the general cell of a reason (handover reason) to perform handover to the general cell.

The communication control may further comprise: after the step B, a step D of sending the general cell a proximity notification (Proximity indication) indicating that the specific cell exists near the user terminal from the user terminal; and a step E of ignoring the proximity notification from the user terminal by the general cell if the reason notified in the step B1 is that the user terminal desires to receive the MBMS data.

The communication control method may further comprise a step B2 of sending, from the specific cell, the user terminal proximity notification setting information (e.g. report Proximity Config) to be used by the user terminal for transmission of a proximity notification, wherein in the step B2, the specific cell may notify the user terminal of a cell to be excluded from targets of the proximity notification.

The communication control method may further comprise a step F of sending, from the general cell, the user terminal proximity notification setting information to be used by the user terminal for transmission of a proximity notification, wherein in the step F, according to the reason notified in the step B1, the general cell may notify the user terminal of a cell to be excluded from targets of the proximity notification.

The cell to be excluded from targets of the proximity notification may be the specific cell.

The step B may comprise a step B4 of performing control by the specific cell such that the specific cell does not send the user terminal proximity notification setting information (e.g. report Proximity Config) to be used by the user terminal for transmission of a proximity notification.

The communication control method may further comprise, after the step B, a step G of performing control by the general cell such that the general cell does not send the user terminal proximity notification setting information (e.g. report Proximity Config) to be used by the user terminal for transmission of a proximity notification, according to the reason notified in the step B1.

The communication control method may further comprise a step F of excluding, by the user terminal, the specific cell from targets of a proximity notification, when the user terminal receives proximity notification setting information (e.g. report Proximity Config) to be used by the user terminal for transmission of the proximity notification from the specific cell or the general cell, after sending the MBMS interest notification.

A user terminal according to the present invention employed in a mobile communication system including a general cell supporting PTM transmission of MBMS data and a specific cell not supporting PTM transmission of the MBMS data, the user terminal comprises a transmitter (e.g. radio transceiver 210 and controller 240) that sends the specific cell an MBMS interest notification indicating a desire to receive the MBMS data, in the course of establishing a connection with the specific cell.

A communication control method employed in a mobile communication system including a general cell supporting PTM transmission of MBMS data and a specific cell not supporting PTM transmission of MBMS data includes a step of: sending the specific cell an MBMS interest notification from a user terminal establishing a connection with the specific cell, the MBMS interest notification indicating that the user terminal desires to receive the MBMS data. With this, the specific cell is notified that the user terminal desires to receive the MBMS data, and thus can make the user terminal perform handover from the specific cell to the general cell. As a result, the user terminal can receive the MBMS data transmitted from the general cell while being located in the specific cell.

After completion of the handover from the specific cell to the general cell, handover from the general cell to the specific cell is preferably prevented. To enable such control, the specific cell should preferably notify the general cell of the reason for performing the handover (i.e., the UE's desire to receive MBMS data) when sending the general cell a handover request via the network interface . This allows the user terminal to continuously receive the MBMS data transmitted from the general cell. The following embodiment discloses multiple operation patterns for preventing occurrence of handover from the general cell to the specific cell.

Moreover, if the user terminal no longer desires to receive the MBMS data transmitted from the general cell after completion of the handover from the specific cell to the general cell, the user terminal should preferably send the general cell an MBMS non-interest notification to this effect. With this, the general cell is notified that the user terminal no longer desires to receive the MBMS data, and thus enables the user terminal to perform handover from the general cell to the specific cell.

### [Embodiment]

In the embodiment, a description is given by taking as an example a mobile communication system configured in accordance with the 3GPP standard of release 10 or later (i.e., LTE Advanced).

Hereinafter, (1) outline of LTE system, (2) outline of MBMS, (3) configurations of eNB, HeNB, and UE, and (4) operations of eNB, HeNB, and UE are described in this order.

### (1) Outline of LTE System

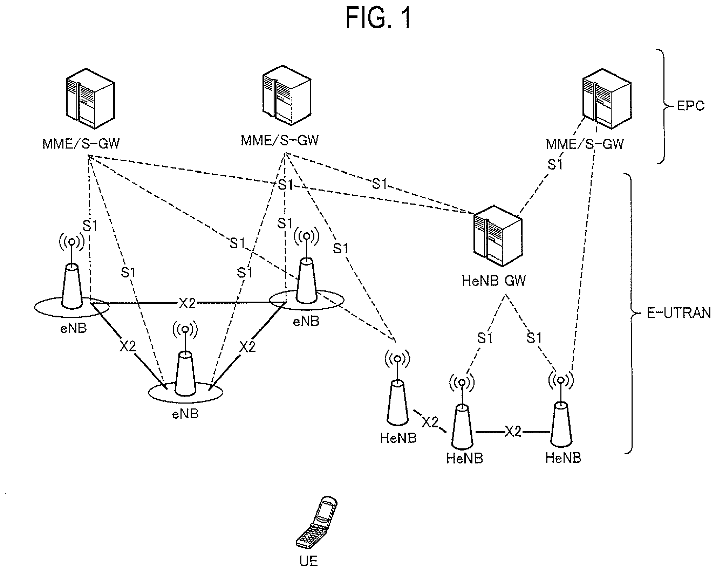

Fig. 1 shows a configuration of an LTE system. As shown in Fig. 1, the LTE system is formed of an E-UTRAN (Evolved-UMTS Terrestrial Radio Access Network), a UE (User Equipment), and an EPC (Evolved Packet Core).

The E-UTRAN includes an eNB (evolved Node-B), an HeNB (Home evolved Node-B), and an HeNB GW (Home evolved Node-B Gateway) .

The eNB manages a macro-cell and performs radio communication with the UE which establishes a connection (RRC connection) with the macro-cell.

The macro-cell supports MBMS. To be specific, the macro-cell is capable of transmitting MBMS data by PTM (multicast). In the embodiment, the macro-cell corresponds to a general cell (MBMS cell), and the eNB corresponds to a general base station.

The HeNB is a cell of a smaller coverage than the macro-cell, and manages a CSG (Closed Subscriber Group) cell to which only a UE having access right can access. The HeNB performs radio communication with the UE which establishes a connection (RRC connection) with the CSG cell.

The CSG cell does not support MBMS. To be specific, the CSG cell is not capable of transmitting MBMS data by PTM. Note, however, that the CSG cell is capable of transmitting MBMS data by PTP (unicast) . In the embodiment, the CSG cell corresponds to a specific cell (non-MBMS cell), and the HeNB corresponds to a specific base station.

In addition, the eNB and the HeNB have a radio resource management (RRM) function, a user data routing function, and a measurement control function for mobility control and scheduling, for example.

The HeNB GW has multiple HeNBs connected thereto, and manages the multiple HeNBs.

The EPC includes MMEs (Mobile Management Entities) and S-GWs (Serving-Gateways). The MME is a network entity for performing various mobility control for the UE, and corresponds to a control station. The S-GW is a network entity for controlling transfer of user data, and corresponds to an exchange.

The eNBs (the HeNBs) are mutually connected via an X2 interface. The eNB (the HeNB) is connected with the MME and the S-GW (HeNB GW) via an S1 interface. The X2 interface and the S1 interface form a network interface.

The UE is a mobile radio communication device, and performs radio communication with a cell (serving cell) with which it establishes a connection (RRC connection). In the embodiment, the UE corresponds to a user terminal.

The UE in an idle mode (RRC idle mode) which is a standby mode selects a serving cell, and camps on the selected cell. Processing of changing the serving cell in the RRC idle mode is referred to as cell reselection.

The UE in a connected mode (RRC connected mode) which is a communicating state performs radio communication with the serving cell. Processing of changing the serving cell in the RRC connected mode is referred to as handover.

The UE supports MBMS. Specifically, the UE in the RRC idle mode or in the RRC connected mode can receive MBMS data transmitted from the eNB by PTM.

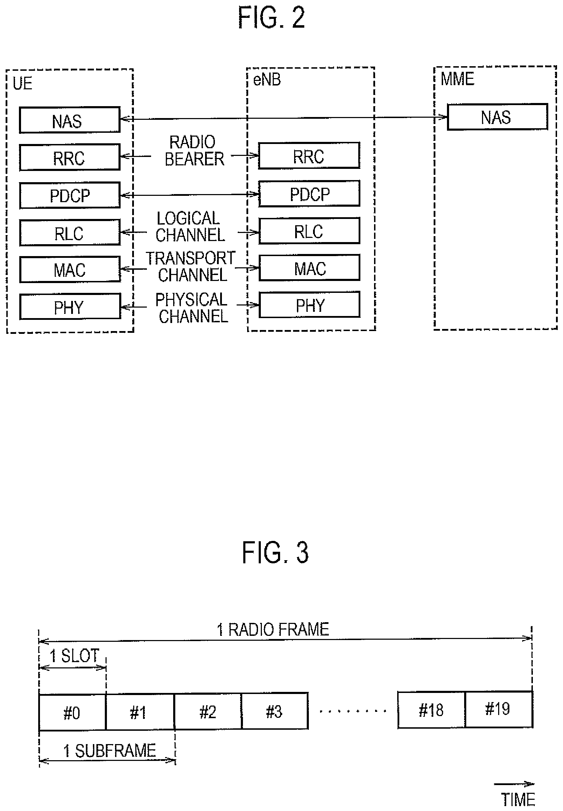

Fig. 2 shows a protocol stack of a radio interface of the LTE system.

As shown in Fig. 2, radio interface protocols are classified into layer 1 to layer 3 of the OSI reference model, where layer 1 is the physical (PHY) layer. Layer 2 includes the MAC (Media Access Control) layer, the RLC (Radio Link Control) layer, and the PDCP (Packet Data Convergence Protocol) layer. Layer 3 includes the RRC (Radio Resource Control) layer.

The physical layer performs data coding/decoding, modulation/demodulation, antenna mapping/demapping, and resource mapping/demapping. The physical layer provides a transmission service to the upper layer through a physical channel. Data is transmitted through a physical channel between the physical layer of the UE and the physical layer of the eNB. The physical layer is connected to the MAC layer via a transport channel.

The MAC layer performs priority control of data, retransmission processing by hybrid ARQ (HARQ), and the like. Data is transmitted through a transport channel between the MAC layer of the UE and the MAC layer of the eNB. The MAC layer of the eNB includes a MAC scheduler configured to determine a transport format and resource blocks to be used in the uplink and the downlink. A transport format includes a transport block size, a modulation and coding scheme (MCS), and antenna mapping.

The RLC layer uses the functions of the MAC layer and the physical layer to transmit data to the RLC layer on the reception side. Data is transmitted through a logical channel between the RLC layer of the UE and the RLC layer of the eNB.

The PDCP layer performs header compression/expansion and encryption/decoding.

The RRC layer is defined only in a control plane. Data is transmitted through a radio bearer between the RRC layer of the UE and the RRC layer of the eNB. The RRC layer controls a logical channel, a transport channel, and a physical channel according to establishment, reestablishment and release of the radio bearer. When an RRC connection is established between the RRC of the UE and the RRC of the eNB, the UE is in an RRC connected mode, and if not, the UE is in an RRC idle mode.

A NAS (Non-Access Stratum) layer positioned higher than the RRC layer performs session management, mobility management and the like.

Fig. 3 shows a configuration of a radio frame used in the LTE system. The LTE system employs OFDMA (Orthogonal Frequency Division Multiplexing Access) in the downlink, and SC-FDMA (Single Carrier Frequency Division Multiple Access) in the uplink.

As shown in Fig. 3, a radio frame is formed of ten subframes aligned in the time direction, and each subframe is formed of two slots arranged side by side in the time direction. Each subframe is 1 ms in length, and each slot is 0.5 ms in length. Each subframe includes multiple resource blocks (RB) in the frequency direction, and includes multiple symbols in the time direction. A guard interval called a cyclic prefix (CP) is provided at the beginning of each symbol.

In the downlink, an interval of the couple of symbols at the beginning of each subframe is mainly a control region used as a physical downlink control channel (PDCCH). The remaining interval of the subframe is a data region mainly used as a physical downlink shared channel (PDSCH).

In the uplink, the two ends of each subframe in the frequency direction are control regions mainly used as a physical uplink control channel (PUCCH). A center portion of the subframe in the frequency direction is a data region mainly used as a physical uplink shared channel (PUSCH).

### (2) Outline of MBMS

MBMS is a bearer service for achieving broadcast delivery, and is a scheme in which MBMS data is simultaneously transmitted by a common bearer to multiple UEs desiring to receive the MBMS data.

In the LTE system, multiple eNBs form an MBSFN (MBMS Single Frequency Network), and MBMS data can be transmitted by an MBSFN transmission scheme. The eNBs included in the MBSFN simultaneously and synchronously send the same signal. Accordingly, the UE can perform RF (Radio Frequency) synthesis for signals sent from the eNBs.

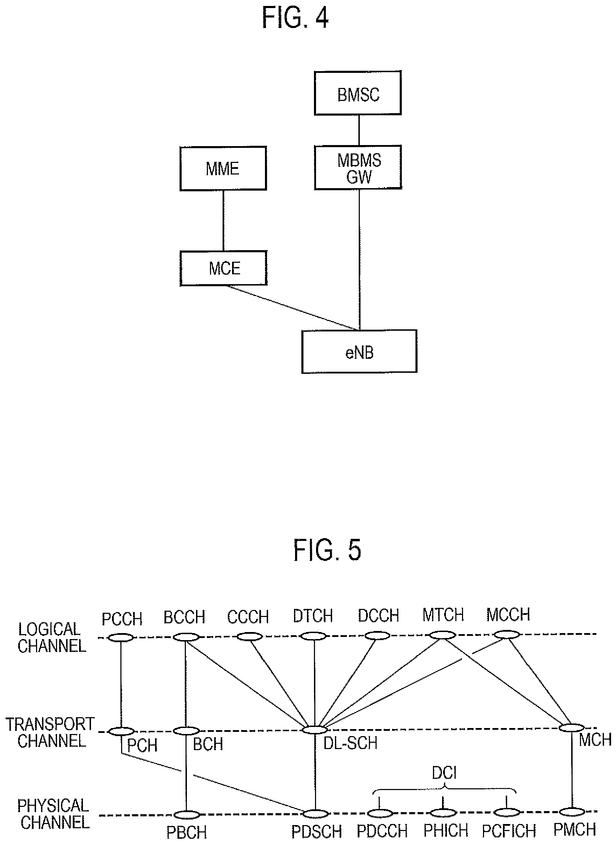

Fig. 4 shows a logical composition of an eMBMS base. As shown in Fig. 4, other than the network entities shown in Fig. 1, the LTE system includes a BMSC (Broadcast Multicast Service Center), an MBMS GW (MBMS Gateway), and an MCE (Multi-Cell Multicast Coordination Entity).

The BMSC holds MBMS data to be transmitted. The MBMS GW transmits the MBMS data held by the BMSC to the eNBs by IP (Internet Protocol) multicast. For each of the eNBs in the MBSFN, the MCE synchronizes the MBMS data or assigns radio resource for the MBMS data.

Fig. 5 shows mapping among logical channels, transport channels, and physical channels in the downlink. As shown in Fig. 5, the LTE system defines anMTCH (Multicast Traffic Channel) and an MCCH (Multicast Control Channel) as logical channels for MBMS. Additionally, the LTE system defines an MCH (Multicast Channel) as a transport channel for MBMS.

The macro-cell (eNB) sends MBMS data and MBMS service information for controlling MBMS data delivery through the multicast channel (the MTCH and the MCCH) by multicast delivery (PTM transmission).

On the other hand, the CSG cell (HeNB) cannot use the MTCH or the MCCH. Note, however, that the CSG cell (HeNB) can send MBMS data and MBMS service information to a UE establishing an RRC connection with the CSG cell (HeNB), through a channel such as a DTCH (Dedicated Traffic Channel) and a DCCH (Dedicated Control Channel) by unicast delivery (PTP delivery).

It is to be noted that the macro-cell and the CSG cell send broadcast information through a broadcast channel (BCCH; Broadcast Control Channel) by broadcast. Broadcast information is information such as an MIB (Master Information Block) and an SIB (System Information Block), for example.

### (3) Configurations of eNB, HeNB, and UE

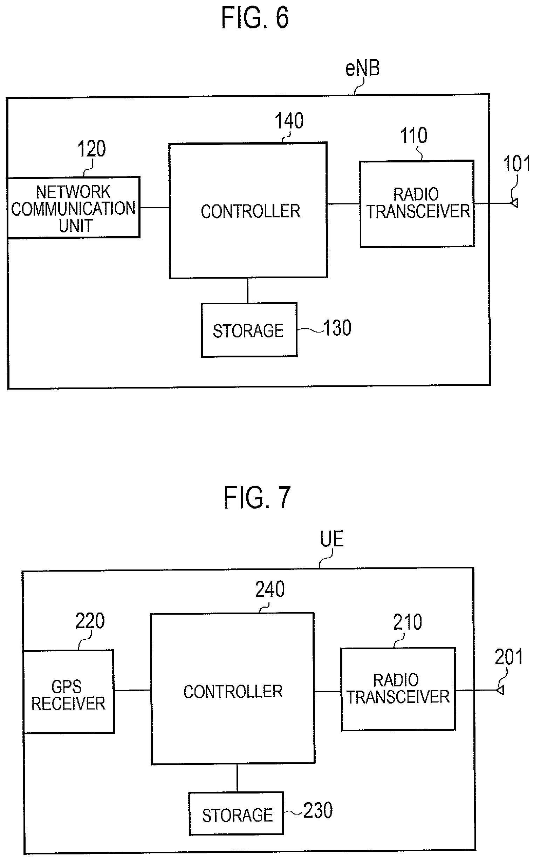

Fig. 6 is a block diagram of the eNB. Since the HeNB has the same block configuration as the eNB, the configuration of the eNB will be described below to represent the eNB and the HeNB.

As shown in Fig. 6, the eNB includes an antenna 101, a radio transceiver 110, a network communication unit 120, a storage 130, and a controller (processor) 140.

The antenna 101 and the radio transceiver 110 are used for transmission and reception of radio signals. The network communication unit 120 performs communication via the X2 interface and the S1 interface. The storage 130 stores therein information used for control by the controller 140. The controller 140 performs processing in the aforementioned layers, as well as performs various control to be described below.

Fig. 7 is a block diagram of the UE. As shown in Fig. 7, the UE includes an antenna 201, a radio transceiver 210, a GPS (Global Positioning System) receiver 220, a storage 230, and a controller (processor) 240.

The antenna 201 and the radio transceiver 210 are used for transmission and reception of radio signals. The GPS receiver 220 receives GPS signals to acquire UE location information indicating a location of the UE. The storage 230 stores therein information used for control by the controller 240. The controller 240 performs processing in the aforementioned layers, as well as performs various control to be described below. The controller 240 also acquires UE location information based on an output of the GPS receiver 220. Note that in a case where the UE does not have the GPS receiver 220, the UE location information may be acquired on the basis of a radio signal received by the radio transceiver 210.

The storage 230 stores therein a white list which is a list of GSG cells to which the UE has access right (specifically, a list of CSG IDs). The storage 230 also stores therein GSG cell location information indicating the locations of the GSG cells to which the UE has access right. The GSG cell location information is used together with the UE location information in an autonomous search procedure, which is processing for determining whether or not a GSG cell to which the UE has access right (i.e., an accessible GSG cell) exists near the UE.

### (4) Operations of eNB, HeNB, and UE

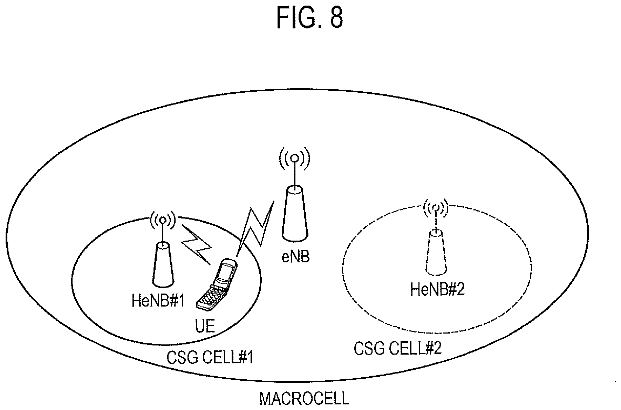

Fig. 8 shows an operation environment of the eNB and the UE according to the embodiment.

As shown in Fig. 8, a CSG cell #1 operated at a frequency different from that of the macro-cell is provided inside the macro-cell, and the UE in the RRC idle mode is located at a point where the macro-cell overlaps the CSG cell #1. Incidentally, multiple CSG cells may be provided inside a single macro-cell. For example, a CSG cell #2 may be provided in addition to the CSG cell #1 in the macro-cell.

The UE is a member UE of the CSG cell #1, has access right to the CSG cell #1, and establishes an RRC connection with the CSG cell #1. If the macro-cell starts delivery of MBMS data which the UE desires to receive in this situation, the UE cannot receive the MBMS data from the macro-cell.

Hence, the UE establishing the RRC connection with the CSG cell #1 sends the CSG cell #1 an MBMS interest notification indicating that the UE desires to receive MBMS data transmitted from the macro-cell. With this, the CSG cell #1 is notified that the UE desires to receive the MBMS data, and thus can make the UE perform handover from the CSG cell #1 to the macro-cell. As a result, the UE can receive MBMS data transmitted from the macro-cell while being located in the CSG cell #1.

Note that after completion of the handover from the CSG cell #1 to the macro-cell, control is performed to prevent handover from the macro-cell to the CSG cell #1. Then, the UE can continuously receive MBMS data transmitted from the macro-cell. Later-described operation patterns 1 to 6 describe different control methods for preventing occurrence of handover from the macro-cell to the CSG cell #1.

Moreover, if reception of the MBMS data transmitted from the macro-cell is no longer desired after completion of the handover from the CSG cell #1 to the macro-cell, the UE sends the macro-cell an MBMS non-interest notification to this effect. With this, the macro-cell is notified that the UE no longer desires to receive the MBMS data, and thus enables the UE to perform handover from the macro-cell to the CSG cell #1.

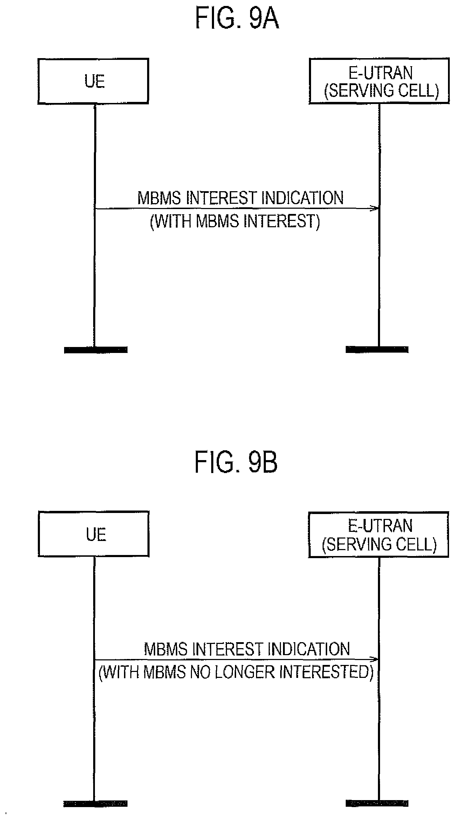

Fig. 9A shows illustrative embodiment 1 of the MBMS interest notification, and Fig. 9B shows illustrative embodiment 1 of the MBMS non-interest notification. In illustrative embodiments 1, a common message format is used for the MBMS interest notification and the MBMS non-interest notification.

As shown in Fig. 9A, if the UE desires to receive MBMS data, it sends the serving cell information indicating its desire to receive MBMS data by including the information in an MBMSInterestlndication message. The UE forms the MBMS Interest Indication message by also including at least one of information indicating the frequency of the cell transmitting MBMS data or an identifier (cell ID) of the cell. The information indicating the frequency of the cell transmitting MBMS data is information indicating a frequency for MBMS, for example.

As shown in Fig. 9B, if the UE no longer desires to receive MBMS data, the UE sends the serving cell information indicating that the UE no longer desires to receive MBMS data, by including the information in the MBMSInterestlndication message.

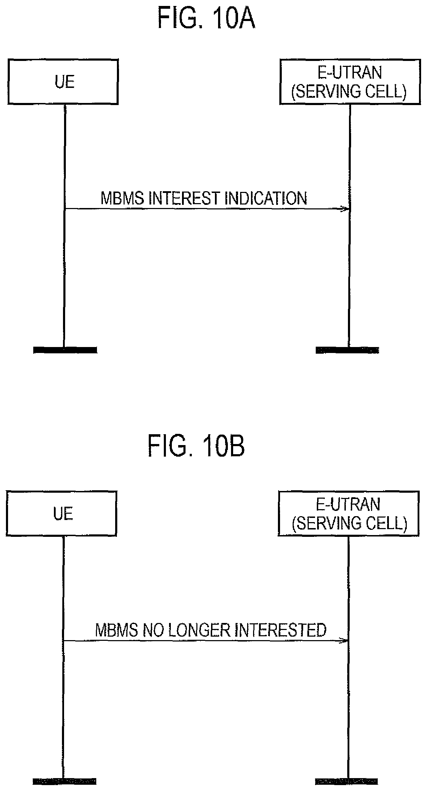

Fig. 10A shows illustrative embodiment 2 of the MBMS interest notification, and Fig. 10B shows illustrative embodiment 2 of the MBMS non-interest notification. In illustrative embodiments 2, different message formats are used for the MBMS interest notification and the MBMS non-interest notification.

As shown in Fig. 10A, if the UE desires to receive MBMS data, the UE sends the serving cell the MBMSInterestIndication message indicating that the UE desires to receive MBMS data. The UE also includes in the MBMSInterestIndication message at least one of information indicating the frequency of the cell transmitting MBMS data or an identifier (cell ID) of the cell. The information indicating the frequency of the cell transmitting MBMS data is information indicating a frequency for MBMS, for example.

As shown in Fig. 10B, if the UE no longer desires to receive MBMS data, the UE sends the serving cell an MBMS no longer interested message indicating that the UE no longer desires to receive MBMS data.

### (4.1) Operation Pattern 1

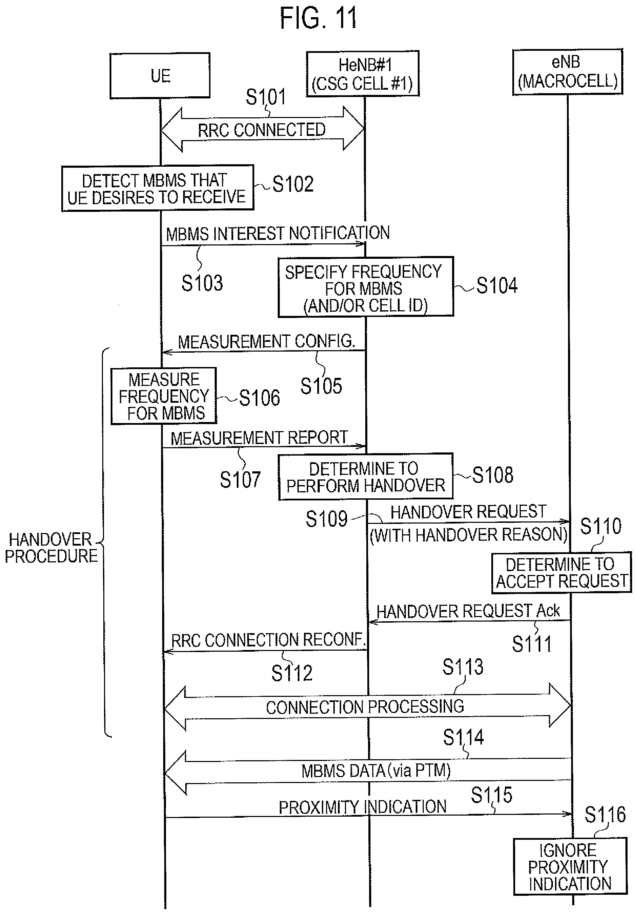

Fig. 11 is a sequence chart showing operation pattern 1 carried out in the operation environment shown in Fig. 8.

As shown in Fig. 11, in step S101, the UE is in a mode (RRC connected mode) where it establishes an RRC connection with the CSG cell #1 (HeNB #1).

In step S102, the UE receives MBMS service information from the CSG cell #1 (HeNB #1) and thereby detects that the macro-cell starts delivery of MBMS data which the UE desires to receive. Alternatively, the UE receives MBMS service information from the macro-cell (eNB) and thereby detects that the macro-cell starts delivery of MBMS data which the UE desires to receive. The UE also detects the frequency for MBMS (and/or a cell ID of the macro-cell) based on the MBMS service information.

In step S103, the UE sends the CSG cell #1 (HeNB #1) an MBMS interest notification. As described earlier, the MBMS interest notification includes the frequency for MBMS (and/or a cell ID of the macro-cell).

In step S104, the CSG cell #1 (HeNB #1) is notified that the UE desires to receive the MBMS data and of the frequency for MBMS (and/or a cell ID of the macro-cell) according to the MBMS interest notification from the UE.

In step S105, the CSG cell #1 (HeNB #1) sends the UE measurement configuration information instructing measurement of the frequency for MBMS (and/or a cell ID of the macro-cell) . This measurement includes measurement of a reference signal received power (RSRP) and/or measurement of a reference signal received quality (RSRQ). The measurement configuration information also includes information on a measurement gap for measuring the reception quality of the frequency for MBMS (and/or a cell ID of the macro-cell).

In step S106, the UE measures the frequency for MBMS (and/or a cell ID of the macro-cell) based on the measurement configuration information received from the CSG cell #1 (HeNB #1).

In step S107, the UE sends the CSG cell #1 (HeNB #1) a measurement report including information on a result of measurement of the frequency for MBMS (and/or a cell ID of the macro-cell).

In step S108, the CSG cell #1 (HeNB #1) determines whether or not to perform handover to the macro-cell (eNB) according to the measurement report from the UE. The following description is given under the assumption that the CSG cell #1 (HeNB #1) determines to perform the handover to the macro-cell (eNB).

In step S109, the CSG cell #1 (HeNB #1) sends the macro-cell (eNB) via a network interface a handover request for requesting handover to the macro-cell (eNB) . The handover request may be sent from the CSG cell #1 (HeNB #1) to the macro-cell (eNB) via the MME.

When sending the macro-cell (eNB) the handover request via the network interface, the CSG cell #1 (HeNB #1) notifies the macro-cell (eNB) of a handover reason (i.e., the UE's desire to receive MBMS data) indicating the reason of the handover. The handover reason may be included as an information element in the handover request.

In step S110, the macro-cell (eNB) determines whether or not to accept the handover request based on the handover request from the CSG cell #1 (HeNB #1). In a case of determining to accept the handover request, the macro-cell (eNB) stores therein the handover reason received from the CSG cell #1 (HeNB #1).

The following description is given under the assumption that the macro-cell (eNB) determines to accept the handover request.

In step Sill, the macro-cell (eNB) sends the CSG cell #1 (HeNB #1) via the network interface a positive response to the handover request. The positive response may be sent from the macro-cell (eNB) to the CSG cell #1 (HeNB #1) via the MME.

In step S112, upon receipt of the positive response from the macro-cell (eNB), the CSG cell #1 (HeNB #1) sends the UE an RRC connection reconfiguration message to perform handover to the macro-cell (eNB). The RRC connection reconfiguration message is a handover instruction to the macro-cell (eNB).

In step S113, the UE performs connection processing to establish an RRC connection with the macro-cell (eNB). The connection processing includes a random access procedure and an RRC connection establishment procedure.

In step S114, the UE receives MBMS data transmitted from the macro-cell (eNB) by PTM.

In step S115, the UE still located in the CSG cell #1 performs the aforementioned autonomous search procedure and sends the macro-cell (eNB) a proximity notification indicating that an accessible CSG cell exists near the UE.

In step S116, the macro-cell (eNB) being notified the handover reason by the CSG cell #1 (HeNB #1) in step S109 knows that the UE desires to receive MBMS data, and thus ignores the proximity notification received from the UE.

Thus, in operation pattern 1, even when receiving the proximity notification indicating that an accessible CSG cell exists near the UE from the UE, the macro-cell (eNB) ignores the proximity notification if the handover reason notified by the CSG cell #1 (HeNB #1) indicates that the UE desires to receive MBMS data. With this, in a case where the UE receives MBMS data from the macro-cell (eNB), it is possible to prevent the UE from performing handover to the CSG cell #1 (HeNB #1), and thus the UE can continuously receive the MBMS data.

### (4.2) Operation Pattern 2

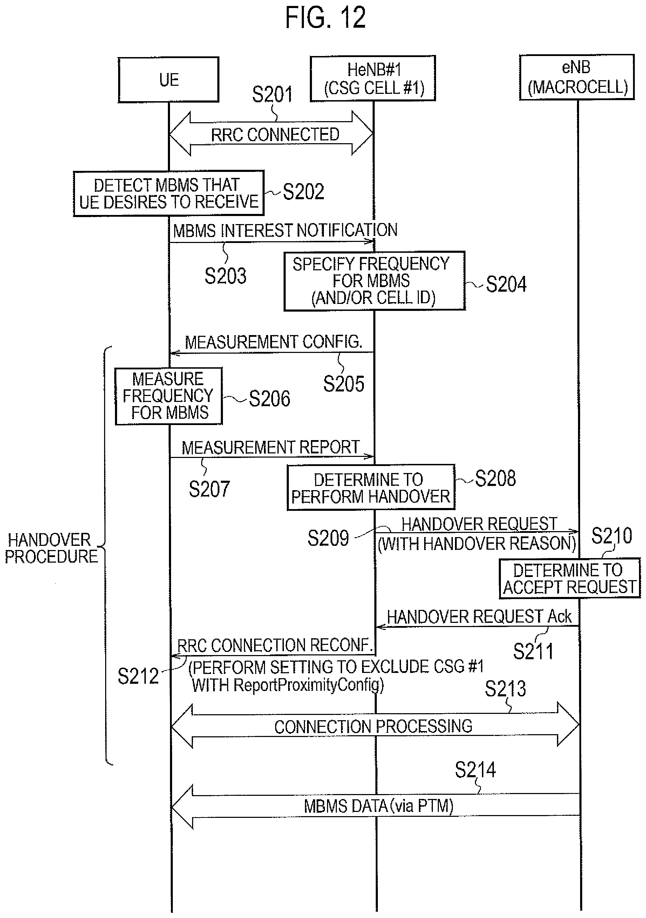

Fig. 12 is a sequence chart showing operation pattern 2 carried out in the operation environment shown in Fig. 8. Hereinafter, parts of the operation different from aforementioned operation pattern 1 are described while redundant description is omitted.

As shown in Fig. 12, steps S201 to S211 are the same as aforementioned operation pattern 1.

In step S212, upon receipt of the positive response from the macro-cell (eNB), the CSG cell #1 (HeNB #1) sends the UE an RRC connection reconfiguration message to perform handover to the macro-cell (eNB). The RRC connection reconfiguration message is a handover instruction to the macro-cell (eNB).

Here, the CSG cell #1 (HeNB #1) sends, together with the RRC connection reconfiguration message, the UE proximity notification setting information (ReportProximityConfig) to be used by the UE for transmission of a proximity notification. The proximity notification setting information includes information (such as a cell ID of the CSG cell #1) for specifying the CSG cell #1 as a cell to be excluded from targets of the proximity notification. Upon receipt of the proximity notification setting information, the UE memorizes the CSG cell #1 as a cell to be excluded from targets of the proximity notification.

In step S213, the UE performs connection processing for establishing an RRC connection with the macro-cell (eNB) . The connection processing includes the random access procedure and the RRC connection establishment procedure.

In step S214, the UE receives MBMS data transmitted from the macro-cell (eNB) by PTM.

Although still located in the CSG cell #1, the UE memorizes the CSG cell #1 as a cell to be excluded from targets of the proximity notification. For this reason, the UE excludes the CSG cell #1 from targets of the aforementioned autonomous search procedure, and accordingly does not send a proximity notification on the CSG cell #1 to the macro-cell (eNB) . Note, however, that if there is an accessible CSG cell (CSG cell #2) other than the CSG cell #1 nearby, the UE can send a proximity notification on the CSG cell #2 to the macro-cell (eNB).

Thus, in operation pattern 2, the CSG cell #1 (HeNB #1) notifies the UE of the CSG cell #1 as a cell to be excluded from targets of the proximity notification by proximity notification setting information (ReportProximityConfig). With this, in a case where the UE receives MBMS data from the macro-cell (eNB), it is possible to prevent the UE from performing handover to the CSG cell #1 (HeNB #1), and thus the UE can continuously receive the MBMS data.

### (4.3) Operation Pattern 3

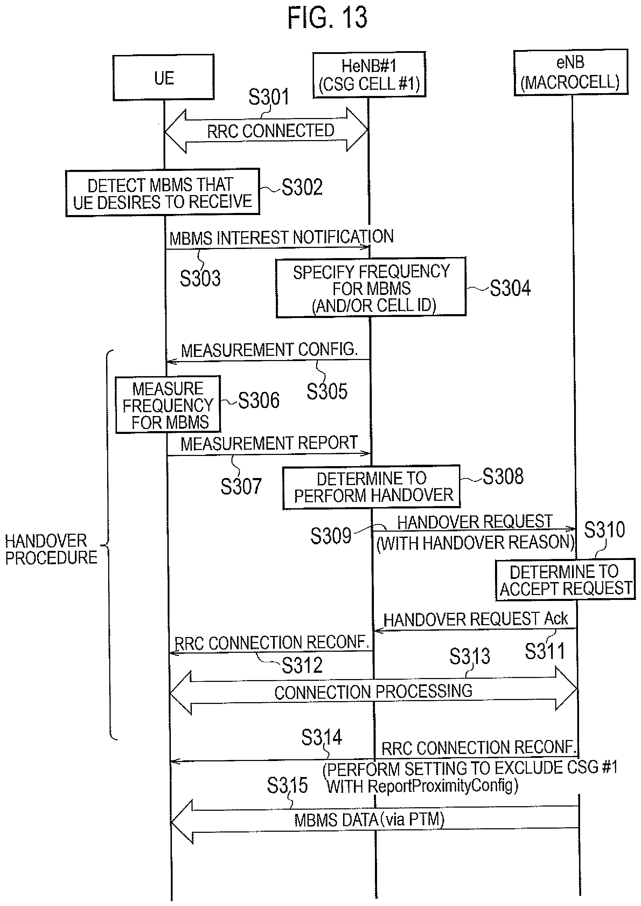

Fig. 13 is a sequence chart showing operation pattern 3 carried out in the operation environment shown in Fig. 8. Hereinafter, parts of the operation different from aforementioned operation pattern 1 are described while redundant description is omitted.

As shown in Fig. 13, steps S301 to S313 are the same as aforementioned operation pattern 1. To be specific, the macro-cell (eNB) knows that the UE desires to receive MBMS data by the handover reason notified by the CSG cell #1 (HeNB #1) in a handover procedure.

In step S314 after completion of the handover procedure, the macro-cell (eNB) sends the UE proximity notification setting information together with the RRC connection reconfiguration message, according to the handover reason notified by the CSG cell #1 (HeNB #1). The proximity notification setting information includes information (such as a cell ID of the CSG cell #1) for specifying the CSG cell #1 as a cell to be excluded from targets of the proximity notification. Upon receipt of the proximity notification setting information, the UE memorizes the CSG cell #1 as a cell to be excluded from targets of the proximity notification.

In step S315, the UE receives MBMS data transmitted from the macro-cell (eNB) by PTM.

Although still located in the CSG cell #1, the UE memorizes the CSG cell #1 as a cell to be excluded from targets of the proximity notification. For this reason, the UE excludes the CSG cell #1 from targets of the aforementioned autonomous search procedure, and accordingly does not send a proximity notification on the CSG cell #1 to the macro-cell (eNB) . Note, however, that if there is an accessible CSG cell (CSG cell #2) other than the CSG cell #1 nearby, the UE can send a proximity notification on the CSG cell #2 to the macro-cell (eNB).

Thus, in operation pattern 3, the macro-cell (eNB) notifies the UE of the CSG cell #1 as a cell to be excluded from targets of the proximity notification by proximity notification setting information (ReportProximityConfig). With this, in a case where the UE receives MBMS data from the macro-cell (eNB), it is possible to prevent the UE from performing handover to the CSG cell #1 (HeNB #1), and thus the UE can continuously receive the MBMS data.

### (4.4) Operation Pattern 4

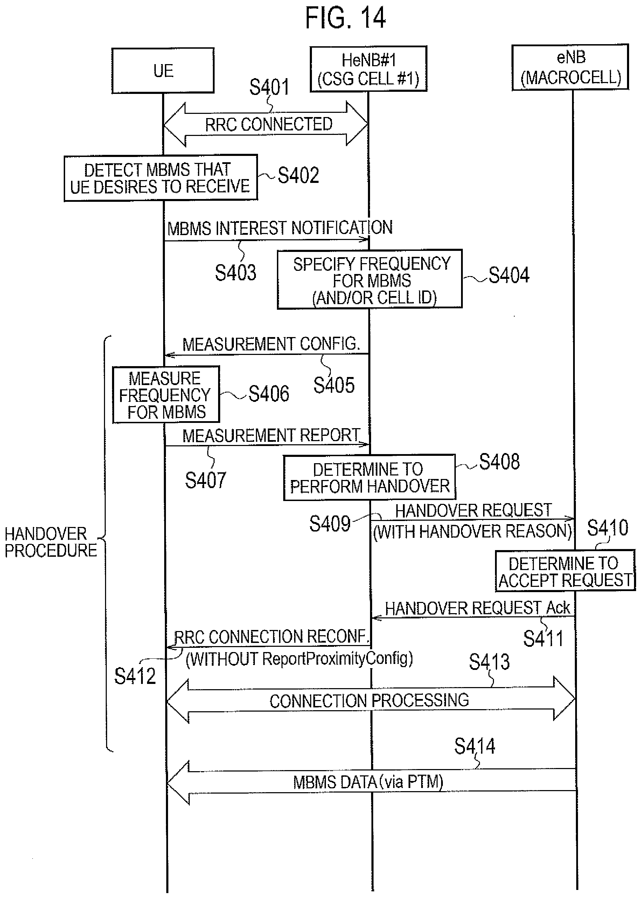

Fig. 14 is a sequence chart showing operation pattern 4 carried out in the operation environment shown in Fig. 8. Hereinafter, parts of the operation different from aforementioned operation pattern 1 are described while redundant description is omitted.

As shown in Fig. 14, steps S401 to S411 are the same as aforementioned operation pattern 1.

In step S412, upon receipt of the positive response from the macro-cell (eNB), the CSG cell #1 (HeNB #1) sends the UE an RRC connection reconfiguration message to perform handover to the macro-cell (eNB). The RRC connection reconfiguration message is a handover instruction to the macro-cell (eNB).

Here, the CSG cell #1 (HeNB #1) does not include in the RRC connection reconfiguration message proximity notification setting information (ReportProximityConfig) to be used by the UE for transmission of a proximity notification. With this, the UE is caused not to perform the aforementioned autonomous search procedure.

In step S413, the UE performs connection processing for establishing an RRC connection with the macro-cell (eNB) . The connection processing includes the random access procedure and the RRC connection establishment procedure.

In step S414, the UE receives MBMS data transmitted from the macro-cell (eNB) by PTM.

Although still located in the CSG cell #1, the UE is caused not to perform the autonomous search procedure, and thus does not send the proximity notification to the macro-cell (eNB).

Thus, in operation pattern 4, the CSG cell #1 (HeNB #1) does not send the UE proximity notification setting information (ReportProximityConfig) to be used by the UE for transmission of a proximity notification. With this, in a case where the UE receives MBMS data from the macro-cell (eNB), it is possible to prevent the UE from performing handover to the CSG cell #1 (HeNB #1), and thus the UE can continuously receive the MBMS data.

### (4.5) Operation Pattern 5

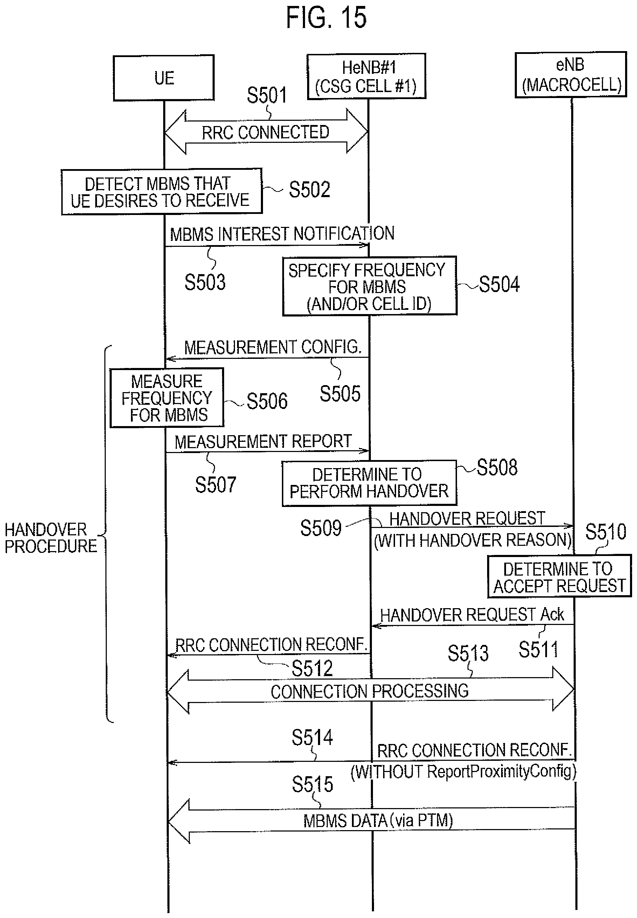

Fig. 15 is a sequence chart showing operation pattern 5 carried out in the operation environment shown in Fig. 8. Hereinafter, parts of the operation different from aforementioned operation pattern 1 are described while redundant description is omitted.

As shown in Fig. 15, steps S501 to S513 are the same as aforementioned operation pattern 1. To be specific, the macro-cell (eNB) knows that the UE desires to receive MBMS data by the handover reason notified by the CSG cell #1 (HeNB #1) in the handover procedure.

In step S514 after completion of the handover procedure, the macro-cell (eNB) sends the UE an RRC connection reconfiguration message not including proximity notification setting information (ReportProximityConfig) to be used by the UE for transmission of a proximity notification, according to the handover reason notified by the CSG cell #1 (HeNB #1). With this, the UE is caused not to perform the aforementioned autonomous search procedure.

In step S515, the UE receives MBMS data transmitted from the macro-cell (eNB) by PTM.

Although still located in the CSG cell #1, the UE is caused not to perform the autonomous search procedure, and thus does not send the proximity notification to the macro-cell (eNB).

Thus, in operation pattern 5, the macro-cell (eNB) sends the UE an RRC connection reconfiguration message not including proximity notification setting information (ReportProximityConfig). With this, in a case where the UE receives MBMS data from the macro-cell (eNB), it is possible to prevent the UE from performing handover to the CSG cell #1 (HeNB #1), and thus the UE can continuously receive the MBMS data.

### (4.6) Operation Pattern 6

In operation patterns 1 to 6 described above, the CSG cell #1 (HeNB #1) or the macro-cell (eNB) takes the initiative to prevent the UE from performing handover to the CSG cell #1 (HeNB #1). However, the UE may take the initiative to prevent the UE from performing the handover to the CSG cell #1 (HeNB #1) .

In operation pattern 6, upon receipt of proximity notification setting information (ReportProximityConfig) from the CSG cell or the macro-cell after transmission of an MBMS interest notification, the UE excludes the CSG cell #1 from targets of the proximity notification. With this, in a case where the UE receives MBMS data from the macro-cell (eNB), it is possible to prevent the UE from performing handover to the CSG cell #1 (HeNB #1), and thus the UE can continuously receive the MBMS data.

### (Conclusion)

In order for the CSG cell to decide whether to handover the UE to the MBMS-capable cell (macro cell), the UE transmits MBMSInterestIndication for indicating UE's MBMS interest, to the CSG cell. To properly handle the case of Outbound Mobility from a CSG cell, it is important for the CSG cell to support MBMSInterestIndication. Moreover, it is important to prevent the UE from returning to the CSG cell so that ping-pong between the cells can be avoided.

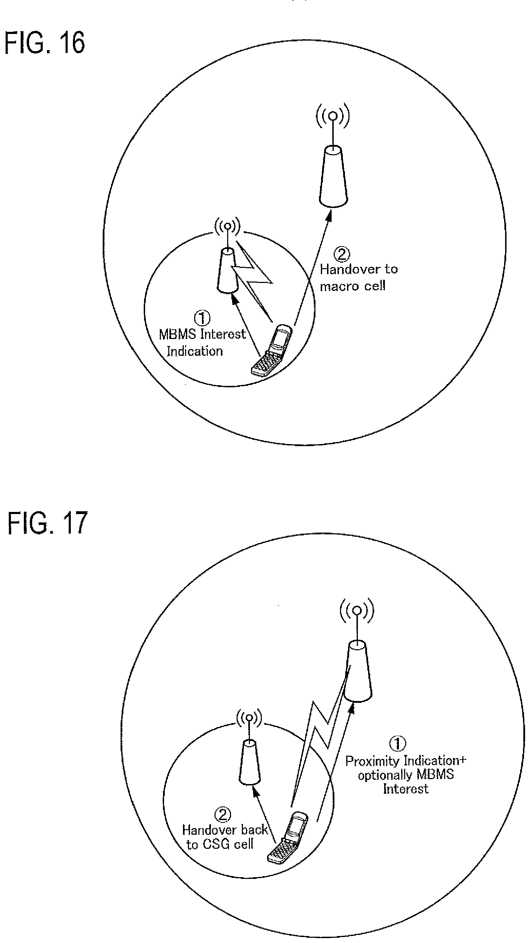

If CSG cells are capable of supporting MBMSInterestIndication reception, it should also provide the necessary assistance to offer good user experience for MBMS. As shown in Fig. 16, the CSG cell receives an MBMSInterestIndication from a UE and handovers the UE to the macro cell with the MBMS service of interest. After handover completion the UE is now served by the macro cell and begins to receive MBMS service as requested by the UE. Since the UE has not changed its location it is still well within the coverage of the CSG cell. The UE will likely send a ProximityIndication message to the macro cell to inform the network of its proximity to the CSG cell. Currently the decision for sending the MBMSInterestIndication is left up to UE implementation. Depending on implementation and timing, the macro cell may not have been informed of the UE's MBMS Interest when the ProximityIndication message is received. As shown in Fig. 17, if the macro cell only receives the ProximityIndication prior to making a handover decision, the macro cell will likely handover the UE back to the CSG cell; thus creating the potential ping-pong effect. In order to prevent ping-pong between the CSG cell and the macro cell, the macro cell should be informed of the UE's MBMS interest in a timely manner.

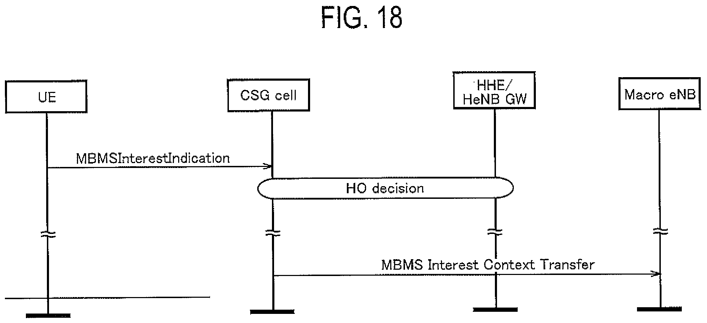

Option 1: As shown in Fig. 18, for handover preparation the CSG cell should transfer the UE's MBMS context to the target eNB, if the CSG cell is capable of supporting MBMSInterestIndication reception.

With the MBMS context transfer information, the macro cell will have a better idea of the UE's MBMS interest and that the handover request is initiated from the CSG cell. With Option 1, if macro cell receive a proximity indication by the UE and receive the CSG cell's measurement report (after configuring an inter-frequency measurement in case CSG is on the different frequency from macro cell), the macro cell will not handover the UE back to the CSG cell without further consideration of the UE's MBMS interest and the network's loading status. This option is suitable if the CSG cell is capable of supporting MBMSInterestIndication reception. As described above, the CSG cell should transfer the UE's MBMS context to the target eNB, if the CSG cell is capable of supporting MBMSInterestIndication reception and if the UE served by the CSG and having an interest of MBMS reception is handed over to the macro cell.

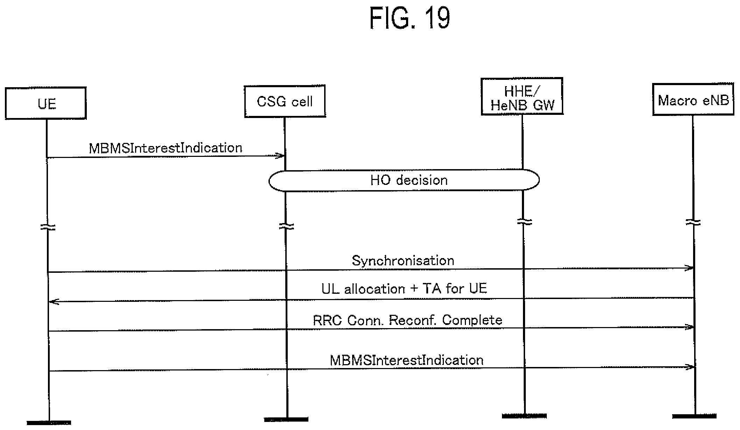

Option 2: As shown in Fig. 19, the UE informs the macro cell of its MBMS interest prior to Proximity Indication, if the handover source cell is CSG cell.

Currently the transmission of the MBMSInterestIndication and ProximityIndication messages are up to UE implementation. With option 2 the context transfer of MBMS information is not required as long as the UE informs the macro cell of its MBMS interest prior to sending the ProximityIndication. This option would be useful whether or not the CSG cell supports MBMSInterestIndication.

Proposal 1: CSG cell which is capable of supporting MBMSInterestIndication reception should also support the UE's MBMS context transfer. Otherwise, UE should send MBMSInterestIndication after handover to Macro cell if the handover source cell is CSG cell. Such the two option is useful to prevent ping-pong between the CSG cell and the macro cell, and to support the continuity of MBMS reception.

UE served by CSG cell should be known whether the serving CSG cell supports the indication of MBMS interest by the same mean of UE served by non-CSG cell.

Proposal 2: The procedure that how the UE knows whether the serving cell supports the indication of MBMS interest should be adopted the one which is available both CSG cell and non-CSG cell.

### [Other Embodiments]

It should not be understood that the description and drawings which constitute part of this disclosure limit the present invention. From this disclosure, various alternative embodiments, examples, and operation techniques will be easily found by those skilled in the art.

For example, in the above embodiment, the macro-cell (eNB) is notified that the UE desires to receive MBMS data by being notified of the handover reason by the CSG cell #1 (HeNB #1) in the handover procedure. However, the macro-cell may be notified that the UE desires to receive MBMS data through MBMSInterestIndication (MBMS interest notification) sent again from the UE to the macro-cell after connection of the UE to the macro-cell is established.

Although the embodiment above describes an example where the general cell is the macro-cell and the specific cell is the CSG cell, the general cell may be a cell smaller than the macro-cell, such as a picocell, and the specific cell may be a hybrid cell. A UE belonging to the CSG regards the hybrid cell as a CSG cell, and a UE not belonging to the CSG regards the hybrid cell as an open cell. Hence, a hybrid cell can be considered as a type of a CSG cell.

Moreover, although the embodiment above is explained by taking the LTE system as an example, the present invention is also applicable to other communication standards such as the UMTS (Universal Mobile Telecommunication System).

This application claims the benefit of priorities from U.S. Provisional Application No. 61/591452 (filed on January 27, 2012) and U.S. Provisional Application No. 61/645997 (filed on May 11, 2012.

## Claims

1. A method, **characterized by** comprising
knowing whether a source cell supports reception of MBMS interest notification, by the user terminal that has an interest in MBMS reception;
transmitting, based on said knowing, the MBMS interest notification from the user terminal to the source cell when the source cell supports the reception of MBMS interest notification;
transferring the MBMS interest notification from the source cell to a target cell during a handover of the user terminal; and
transmitting, based on said knowing, the MBMS interest notification from the user terminal to the target cell after a handover of the user terminal when the source cell does not support the reception of MBMS interest notification.

2. A mobile communication system including a source cell, a target cell and a user terminal having an interest in MBMS reception, wherein
the user terminal is constituted
to know whether the source cell supports reception of MBMS interest notification, and
to transmit, based on said knowing, the MBMS interest notification to the source cell when the source cell supports the reception of MBMS interest notification,
the source cell is constituted to transfer the MBMS interest notification to the target cell during a handover of the user terminal, and
the user terminal is constituted to transmit, based on said knowing, the MBMS interest notification to the target cell after a handover of the user terminal when the source cell does not support the reception of MBMS interest notification.

3. Use of a user terminal for performing the method of claim 1.

4. A user terminal having an interest in MBMS reception and being constituted to be used according to the method of claim 1 in the system according to claim 2, wherein the user terminal is constituted
to know whether the source cell supports reception of the MBMS interest notification;
to transmit, based on said knowing, the MBMS interest notification to the source cell, when the source cell supports the reception of MBMS interest notification; and
to transmit, based on said knowing, the MBMS interest notification to the target cell after a handover of the user terminal when the source cell does not support the reception of MBMS interest notification.

## Patentansprüche

1. Verfahren, **dadurch gekennzeichnet, dass** es Folgendes umfasst:
Wissen, ob eine Ursprungszelle den Empfang von interessierender MBMS-Benachrichtigung durch das Benutzerendgerät, das ein Interesse an MBMS-Benachrichtigung hat, unterstützt;
Übermitteln, basierend auf dem Wissen, der interessierenden MBMS-Benachrichtigung von dem Benutzerendgerät an die Ursprungszelle, wenn die Ursprungszelle den Empfang von interessierender MBMS-Benachrichtigung unterstützt;
Übertragen der interessierenden MBMS-Benachrichtigung von der Ursprungszelle auf eine Zielzelle während eines Weiterreichens des Benutzerendgeräts; und
Übermitteln, basierend auf dem Wissen, der interessierenden MBMS-Benachrichtigung von dem Benutzerendgerät an die Zielzelle nach einem Weiterreichen des Benutzerendgeräts, wenn die Ursprungszelle den Empfang von interessierender MBMS-Benachrichtigung nicht unterstützt.

2. Mobiles Kommunikationssystem, umfassend eine Ursprungszelle, eine Zielzelle und ein Benutzerendgerät, das ein Interesse an MBMS-Empfang hat, wobei
das Benutzerendgerät gebildet ist,
um zu wissen, ob die Ursprungszelle den Empfang von interessierenden MBMS-Benachrichtigungen unterstützt, und
um basierend auf dem Wissen die interessierende MBMS-Benachrichtigung an die Ursprungszelle zu übermitteln, wenn die Ursprungszelle den Empfang von interessierender MBMS-Benachrichtigung unterstützt,
die Ursprungszelle gebildet ist, um die interessierende MBMS-Benachrichtigung während eines Weiterreichens des Benutzerendgeräts auf die Zielzelle zu übertragen, und
das Benutzerendgerät gebildet ist, um basierend auf dem Wissen die interessierende MBMS-Benachrichtigung nach einem Weiterreichen des Benutzerendgeräts auf die Zielzellen zu übertragen, wenn die Ursprungszelle den Empfang von interessierender MBMS-Benachrichtigung nicht unterstützt.

3. Verwendung eines Benutzerendgerät zum Durchführen des Verfahrens nach Anspruch 1.

4. Benutzerendgerät, das ein Interesse an MBMS-Empfang hat und gebildet ist, um gemäß dem Verfahren von Anspruch 1 in dem System nach Anspruch 2 verwendet zu werden, während das Benutzerendgerät gebildet ist,
um zu wissen, ob die Ursprungszelle den Empfang der interessierenden MBMS-Benachrichtigung unterstützt,
um basierend auf dem Wissen die interessierende MBMS-Benachrichtigung an die Ursprungszelle zu übermitteln, wenn die Ursprungszelle den Empfang von interessierender MBMS-Benachrichtigung unterstützt; und
um basierend auf dem Wissen die interessierende MBMS-Benachrichtigung nach einem Weiterreichen des Benutzerendgeräts an die Zielzelle zu übermitteln, wenn die Ursprungsquelle den Empfang von interessierender MBMS-Benachrichtigung nicht unterstützt.

## Revendications

1. Procédé, **caractérisé en ce qu'**il comprend
la connaissance du fait qu'une cellule source supporte ou non la réception d'une notification d'intérêt de MBMS, par le terminal utilisateur qui a un intérêt pour la réception de MBMS ;
la transmission, sur la base de ladite connaissance, de la notification d'intérêt de MBMS depuis le terminal utilisateur à la cellule source lorsque la cellule source supporte la réception de la notification d'intérêt de MBMS ;
le transfert de la notification d'intérêt de MBMS depuis la cellule source à une cellule cible durant un transfert cellulaire du terminal utilisateur ; et
la transmission, sur la base de ladite connaissance, de la notification d'intérêt de MBMS depuis le terminal utilisateur à la cellule cible après un transfert cellulaire du terminal utilisateur lorsque la cellule source ne supporte pas la réception de la notification d'intérêt de MBMS.

2. Système de communication mobile incluant une cellule source, une cellule cible et un terminal utilisateur ayant un intérêt pour une réception de MBMS, dans lequel
le terminal utilisateur est constitué
pour connaître le fait que la cellule source supporte ou non une réception d'une notification d'intérêt de MBMS, et
pour transmettre, sur la base de ladite connaissance, la notification d'intérêt de MBMS à la cellule source lorsque la cellule source supporte la réception de la notification d'intérêt de MBMS,
la cellule source est constituée pour transférer la notification d'intérêt de MBMS à la cellule cible durant un transfert cellulaire du terminal utilisateur, et
le terminal utilisateur est constitué pour transmettre, sur la base de ladite connaissance, la notification d'intérêt de MBMS à la cellule cible après un transfert cellulaire du terminal utilisateur lorsque la cellule source ne supporte pas la réception de la notification d'intérêt de MBMS.

3. Utilisation d'un terminal utilisateur pour réaliser le procédé de la revendication 1.

4. Terminal utilisateur ayant un intérêt pour une réception de MBMS et étant constitué pour être utilisé selon le procédé de la revendication 1 dans le système selon la revendication 2, dans lequel le terminal utilisateur est constitué
pour connaître le fait que la cellule source supporte une réception d'une notification d'intérêt de MBMS ;
pour transmettre, sur la base de ladite connaissance, la notification d'intérêt de MBMS à la cellule source, lorsque la cellule source supporte la réception de la notification d'intérêt de MBMS ; et
pour transmettre, sur la base de ladite connaissance, la notification d'intérêt de MBMS à la cellule cible après un transfert cellulaire du terminal utilisateur lorsque la cellule source ne supporte pas la réception de la notification d'intérêt de MBMS.
